# EUROPEAN PATENT APPLICATION

(11) **EP 0 889 102 A2**
(43) Date of publication of application: **07.01.1999**
(21) Application number: 98304678.0
(22) Date of filing: 12.06.1998
(51) Int. Cl.: C09D 17/00, C09D 11/00

(54) **Pigment dispersion for the preparation of aqueous inks**

(30) Priority: 19.02.1998 US 26212; 30.06.1997 US 884887
(71) Applicant: ELF ATOCHEM NORTH AMERICA, INC., Philadelphia, Pennsylvania 19103-3222 (US)
(72) Inventor: Zweig, Andrew M., Yardley, PA 19067 (US); Shelton, Kathleen, Reading, PA 19606 (US); Ricker, Wendella M., Haverton, PA 19083 (US); Mabire, Frederic, Minneapolis, MN 55414 (US)
(74) Representative: Stoner, Gerard Patrick

(57) **Abstract**

The present invention is directed to a pigment dispersion for an aqueous ink. The pigment is dispersed in a liquid by a dispersing agent wherein the dispersing agent comprises a styrene/maleic anhydride (SMA) copolymer, a reaction product of the SMA copolymer and an alcohol, or a combination of the SMA copolymer and the SMA copolymer/alcohol reaction product. The weight ratio of the pigment to the dispersing agent in the dispersion is from about 5:1 to about 9:1, and preferably from about 6:1 to about 8:1. The pigment comprises at least about 33 wt% of the total weight of the dispersion, preferably at least about 36 wt. % of the dispersion, and most preferably at least about 40 wt. % of the dispersion. An aqueous ink is prepared combining the pigment dispersion with an emulsion comprising a polymer stabilized in water. The pigment comprises at least about 10 wt.% of the total weight of the ink composition.

## Description

This invention relates generally to the field of printing inks, and more specifically to aqueous flexographic inks.

### Background

Aqueous inks are inks in which a pigment is dispersed in water with the aid of various polymers. The pigment is a small particle, and can be either organic or inorganic, but is insoluble in the water. In formulating an ink, the pigment particles must first be dispersed or "ground" with a dispersing agent. In its dry form, a pigment is composed of aggregates or agglomerates of smaller primary particles, which are tightly bound together and possess high surface energy. In this aggregated state, the desirable chromatic properties which the pigment contributes to a liquid printing ink, are not fully realized.

In order to enhance the utility of the pigment, the aggregates of primary particles must be broken apart and the smaller particles which result from this operation must be stabilized to prevent re-agglomeration. A solution resin, or "binder", is a dispersant which can initially wet the surface of the pigment. After the breakdown of the agglomerated pigment particles by the application of high sheer stress, the binder confers stability on the system. The properties which the pigment dispersing resin contributes to the final ink include resolubility of the ink on the printing press, good transfer from the press printing surface to the substrate, and color strength. The choice of a dispersing resin can affect certain properties of the resulting ink, such as water resistance, color strength, and viscosity. Dispersing agents are commonly one of three types: water soluble resins, emulsion/dispersion resins, or acidic polymer resins soluble in alkali solutions.

The third class of dispersing agents, the acidic polymer resins, are known to confer better pigment dispersibility than the other two classes of dispersing agents and offer equivalent or better rheological and water resistance properties. The common types of acidic polymers include acrylic polymers. rosin esters, and styrene/maleic anhydride copolymers or terpolymers.

In formulating an ink, a dispersed pigment (or "pre-mix"), must then be dispersed in an aqueous medium. An emulsion containing a polymer stabilized in water is introduced to the pigment dispersion. The emulsion polymer is present at usually two or three times the amount of the polymer used to disperse the pigment. The emulsion polymer has film-forming properties by virtue of its high molecular weight. The selection of an emulsion polymer to formulate the ink also effects the ultimate physical properties of the ink. The emulsion polymer affects the adhesive strength of the ink to the substrate, hardness, gloss, transparency and other properties.

Aqueous inks are increasingly in demand, particularly in flexographic printing processes. Because aqueous inks are not formulated with solvents containing volatile organic compounds, these inks are environmentally friendly. Aqueous inks also present diminished occupational hazards for those in the ink processing workplace.

Because of increasing demand for aqueous inks (particularly in flexographic printing operations), there is an equally increasing desire to produce aqueous inks at lower costs. Usually, the most expensive component in an ink is the pigment itself. Accordingly, it is a goal of ink manufacturers to formulate an aqueous ink that incorporates less pigment but maintains the desirable properties of aqueous inks that utilize traditional levels of pigment.

The amount of pigment in an ink formulation that is used in the preparation of the pigment dispersion is generally present at about a 3:1 weight ratio of pigment to binder (dispersing agent). The pigment-to-binder ratio relates the mass of pigment to the mass of solution resin solids used to disperse it. Pigment loading is the term used to describe the total mass of pigment in a prepared dispersion or ink. Inks are typically formulated with a pigment loading of about 10% to about 12%.

One way to provide an aqueous ink that contains lowered levels of pigment is to increase the pigment/dispersant ratio. A higher pigment/dispersant ratio requires less dispersant. The use of such concentrated pigment dispersions permits formulation of an ink of lower cost without prejudicing color development.

Stable pigment dispersions and aqueous ink formulations are provided which allow higher pigment/dispersant ratios and, resultingly, higher pigment loadings. The resulting dispersions also foster brilliant color development and/or beneficially enhanced rheological properties, such as lowered viscosity and increased stability.

A pigment dispersion for an aqueous ink is provided. The pigment is dispersed in a liquid by a dispersing agent wherein the dispersing agent comprises (i) a styrene/maleic anhydride (SMA) copolymer, (ii) a reaction product of an SMA copolymer and an alcohol, or (iii) a combination of (i) and (ii). The weight ratio of the pigment to the dispersing agent in the dispersion is from about 5:1 to about 9:1, and preferably from about 6:1 to about 8:1. The pigment comprises at least about 33 wt.% of the total weight of the dispersion, preferably at least about 36 wt. % of the dispersion, and most preferably at least about 40 wt.% of the dispersion.

The dispersing agent is a styrene/maleic anhydride (SMA) copolymer, or derivative thereof. According to one preferred embodiment, the dispersing agent is an SMA copolymer having a molar ratio of styrene to maleic anhydride of about 1:1 to about 3:1. According to other preferred embodiments, the dispersing agent is an esterification reaction product of 2-butoxyethanol with a styrene/maleic anhydride copolymer having a molar ratio of styrene to maleic anhydride of about 1.5:1 an esterification reaction product of cyclohexanol and isopropanol with a styrene/maleic anhydride copolymer having a molar ratio of styrene to maleic anhydride of about 1.4:1, and an esterification reaction product of N-propyl alcohol with a styrene/maleic anhydride copolymer having a molar ratio of styrene to maleic anhydride of about 2:1.

An aqueous ink is provided comprising the above-described pigment dispersion of the present invention with the addition of an emulsion generally comprising a polymer stabilized in water. The pigment in the inks of the present invention comprises at least about 10 wt. % of the total weight of the ink composition. The polymer in the emulsion may comprise, for example, styrene/butadiene copolymer, styrene/acrylic copolymer, or acrylic polymer.

A method for the preparation of the pigment dispersions of the present invention is provided. The method comprises the steps of combining a pigment, a dispersing agent for the pigment, and a polar liquid to form a pigment dispersion in the liquid. The dispersing agent comprises (i) a styrene/maleic anhydride copolymer, (ii) a reaction product of the styrene/maleic anhydride copolymer and an alcohol, or (iii) a combination of said (i) and (ii). The weight ratio of pigment to dispersing agent in the dispersion is from about 5:1 to about 9:1, preferably from about 6:1 to about 8:1. The pigment comprises at least about 33 wt. % of the total weight of the dispersion, preferably at least about 36 wt. % of the dispersion, and most preferably at least about 40 wt. % of the dispersion. A further step comprises milling the pigment dispersion in a grinding apparatus.

A method for preparing an aqueous ink composition is provided. The method comprises the steps of combining a pigment, a dispersing agent for the pigment, and a polar liquid to form a pigment dispersion in the liquid. The dispersing agent comprises (i) a styrene/maleic anhydride copolymer, (ii) a reaction product of the styrene/maleic anhydride copolymer and an alcohol, (iii) or a combination of (i) and (ii). The weight ratio of pigment to dispersing agent in the dispersion is from about 5:1 to about 9:1, preferably from about 6:1 to about 8:1. The pigment comprises at least about 33 wt. % of the total weight of the dispersion, preferably at least about 36 wt. % of the dispersion, and most preferably at least about 40 wt.% of the dispersion. Further steps include milling the pigment dispersion in a grinding apparatus and combining the pigment dispersion with water and an emulsion comprising a polymer stabilized in water. The weight of the pigment is at least 10% of the total weight of the ink composition.

A method for preparing an aqueous ink composition is provided. The method comprises the steps of combining a pigment, a dispersing agent for the pigment, and a polar liquid to form a pigment dispersion in the liquid. The dispersing agent comprises (i) a styrene/maleic anhydride copolymer, (ii) a reaction product of the styrene/maleic anhydride copolymer and an alcohol. (iii) or a combination of (i) and (ii). The weight ratio of pigment to dispersing agent in the dispersion is from about 5:1 to about 9:1, preferably from about 6:1 to about 8:1. The pigment comprises at least about 33 wt.% of the total weight of the dispersion, preferably at least about 36 wt. % of the dispersion, and most preferably at least about 40 wt. % of the dispersion. The pigment dispersion is then milled. Further steps include preparing a homogeneous mixture comprising water, an emulsion comprising a polymer stabilized in water, and a solution containing a styrene/maleic anhydride copolymer, a reaction product of a styrene/maleic anhydride copolymer and an alcohol, or a combination of said copolymer and said reaction product, then adding the pigment dispersion to the mixture. The weight of the pigment is at least 10% of the total weight of the ink composition.

### Further Explanations: Options and Preferred Features

The pigment dispersion of the invention is comprised of a pigment, a dispersing agent, water, and minor additives such as a defoaming agent. The pigment may be an organic or inorganic pigment. The organic pigment may comprise a polymeric pigment. The pigment is generally a fine. dry powder and is insoluble in water. The pigments identified herein are referenced by standard names as set forth in the British Colour Index.

The dispersing agent comprises a styrene/maleic anhydride copolymer, a reaction product of a styrene/maleic anhydride (SMA) copolymer and an alcohol, or a combination of the SMA copolymer and SMA copolymer/alcohol reaction product. By "styrene/maleic anhydride copolymer" or "SMA copolymer" is meant a polymer formed of styrene and maleic anhydride monomers, and optionally one or more further comonomers. Thus, "copolymer" as used herein is meant to include not only true copolymers (formed of two monomers) but also terpolymers and higher polymers which include styrene and maleic anhydride units. For example, the SMA copolymers utilized in the practice of the present invention may comprise polymer chains of alternating styrene and maleic anhydride units which polymer chains include further an end group of another organic molecule, *e.g.,* 1-methylethylbenzene. The alcohol may be a C₁-C₈ aliphatic, C₁-C₈ cyclic alcohol, or C₆-C₁₀ aromatic alcohol, and preferably a C₁-C₆ cyclic or aliphatic alcohol. The alcohol is preferably monohydric. The alcohol may comprise, for example, 2-butoxyethanol, cyclohexanol, isopropanol, or N-propyl alcohol.

The dispersing agent is generally in the form of a hydrolyzed solution of SMA copolymer or SMA copolymer/alcohol reaction product. The hydrolyzed solution preferably comprises the SMA copolymer or SMA/alcohol reaction product dissolved in an aqueous alkaline solution. An aqueous alkaline solution is useful to hydrolyze the SMA copolymer because the copolymer is not readily soluble in water. The hydroxyl ions of the alkaline solution hydrolyze, or react with, a carbonyl carbon on the anhydride's ring, cleaving a carbon-oxygen single bond. The reaction opens the ring, resulting in the formation of a mono-acid group where the hydroxyl ion reacts with the carbonyl carbon and a mono-acid carboxylate group. The polar carboxylate group on the SMA copolymer creates a hydrophilic area to facilitate solvation. The aqueous alkaline solution used to dissolve the SMA copolymer is preferably prepared from ammonium hydroxide, sodium hydroxide, potassium hydroxide. or an organic amine, such as monoethanolamine. Aqueous alkaline solutions may also be prepared from secondary or tertiary organic amines. Most preferably, a 28% ammonium hydroxide solution is employed as the aqueous alkaline solution used to dissolve the SMA copolymer.

The solution containing the dispersing agent is often referred to in the art as a "solution resin". The amount of SMA copolymer in the solution is generally referred to as the "solids" content of the solution.

SMA copolymers suitable for the present invention include those commercially available from Elf Atochem under the trade names SMA 1000, SMA 2000, SMA 3000, SMA 1440, SMA 17352, and SMA 2625. Each SMA polymer contains an end-group of 1-methylethylbenzene end group on each polymer chain. SMA 1000 is a copolymer containing styrene and maleic anhydride units in an about 1:1 molar ratio, although the ratio may be as high as 1.3:1. A solution of SMA 1000 contains about 37.2 wt.% solids. An aqueous solution of SMA 1000 suitable for dispersing a pigment contains about 57 parts (wt) of 28% ammonium hydroxide solution per 100 parts (wt) of dispersing agent. SMA 2000 is characterized by an about 2:1 molar ratio of styrene to maleic anhydride units. An SMA 2000 solution contains about 22.0 wt.% solids. An aqueous solution of SMA 2000 suitable for dispersing a pigment contains about 42 parts (wt) of 28% ammonium hydroxide solution per 100 parts (wt) of dispersing agent. SMA 3000 is characterized by an about 3:1 molar ratio of styrene to maleic anhydride units. An aqueous solution of SMA 3000 suitable for dispersing a pigment contains about 33 parts (wt) of 28% ammonium hydroxide solution per 100 parts (wt) of dispersing agent.

SMA 1440 is an esterification reaction product of 2-butoxyethanol with a styrene/maleic anhydride copolymer having a molar ratio of styrene to maleic anhydride of about 1.5:1. It is a partial half ester/half acid derivative with 60 to 70% of the anhydride groups half esterified. A solution of SMA 1440 contains about 34.0 wt.% solids. An aqueous solution of SMA 1440 suitable for dispersing a pigment contains about 21 parts (wt) of 28% ammonium hydroxide solution per 100 parts (wt) of dispersing agent.

SMA 17352 is an esterification reaction product of both cyclohexanol and isopropanol with a styrene/maleic anhydride copolymer having a molar ratio of styrene to maleic anhydride of about 1.4:1. A suspension of SMA 17352 contains about 23.1 wt.% solids. An aqueous solution of SMA 17352 suitable for dispersing a pigment contains about 32 parts (wt) of 28% ammonium hydroxide solution per 100 parts (wt) of dispersing agent.

SMA 2625 is an esterification reaction product of N-propyl alcohol with a styrene/maleic anhydride copolymer having a molar ratio of styrene to maleic anhydride of about 2:1. SMA 2625 is approximately one-half ester and one-half alcohol. An aqueous solution of SMA 2625 suitable for dispersing a pigment contains about 26 parts (wt) of 28% ammonium hydroxide solution per 100 parts (wt) of dispersing agent.

Minor additives which may be used in the preparation of the inventive pigment dispersions include surfactants to mitigate or prevent foaming during the preparation. Defoaming agents suitable in the manufacture of pigment dispersions (and inks) described herein are surfactants commercially available as Colloid 999 from Rhone-Poulenc, Sulfonyl DF 110-D and Sulfonyl 104A (an acetylenic glycol), both available from Air Products, and PI 1144A/75 from Ultra Additives. The choice of defoamer depends upon the dispersing agent used in pre-mix preparation. Defoamers, where applicable, are preferably present at about 0.50 wt. % in a pigment dispersion.

The first step in generating a stable ink is the preparation of a pigment dispersion. This may be accomplished in two stages: premixing and milling. Premixing involves the blending of water, a defoaming agent, dispersing agent and pigment. This may be accomplished by hand or with the aid of a mechanical device. Milling involves the application of high shear stress to the premix to grind the dispersion. In this manner, pigment particles are more finely dispersed in the aqueous medium forming the pigment dispersion.

In formulating aqueous inks from stable pigment dispersions, the pigment dispersions are combined with a carrier medium. In the case of aqueous inks, the carrier medium is water. However, in order that the ink have certain physical properties, the carrier medium is initially in the form of an emulsion of high molecular weight polymers. The polymers emulsified in the water, for example, may be styrene/butadiene copolymer, styrene/acrylic copolymer, or acrylic polymer. In lieu of polymers, however, acrylic monomer or acrylic acid esters may be emulsified in water. The emulsified polymer is preferably a styrene/acrylic copolymer. The emulsion must be stabilized in water to prevent coalescence over a wide temperature range, as inks are expected to have significant shelf-lives in a variety of climates. Typical emulsifiers include low molecular weight surfactants (such as sodium stearate), polyvinyl alcohol, or polymeric surfactants. Styrene/maleic anhydride copolymer is a common polymeric surfactant that is used to stabilize the polymer in the emulsion. The amount of polymer in the emulsion is often referred to in the art as the "solids" content of the emulsion.

The emulsions may include, for example, any of the following commercially available emulsions of styrene/acrylic copolymer in water whose specific compositions are proprietary: Joncryl 77, Joncryl 90, Lucidene 605 and SCX2660 from S.C. Johnson. Joncryl 77 and 90 are both 46 wt. % solids and the Lucidene 605 is about 48.5 wt.% solids.

In formulating aqueous inks, a suitable amount of emulsion contains from about 1.5 to about 3 times as much polymer content, by weight, as the amount of dispersing agent present in the pigment dispersion.

"Shocking" may be encountered when preparing inks from high pigment/binder ratio dispersions having a high pigment load, such as the inks of the present invention. Shocking is a destabilization of the dispersion which leads to reagglomeration or flocculation of the pigment. Shocking can be caused by the introduction of additional solution resin to the formulation containing the pigment dispersion. Shocking may also occur when an an emulsion having a glass transition temperature above 90 °C, for example. is added to the formulation containing the pigment dispersion. When shocking occurs, the pigment precipitates from the ink, rendering the ink unusable.

A preferred method of preparing a formulated ink from the pigment dispersions of the present invention comprises the following steps. A pigment dispersion is prepared as above. In a separate vessel. an emulsion comprising a polymer stabilized in water is combined (in any convenient order) with water and a solution (additional solution resin) containing a styrene/maleic anhydride copolymer, a reaction product of a styrene/maleic anhydride copolymer and an alcohol, or a combination of the copolymer and the reaction product. Other ingredients may also include, for example, a defoaming agent or a coalescing agent. The resulting mixture is then added to the pigment dispersion.

The ingredients of the ink except the pigment dispersion may be mixed together in any convenient order. Addition of the pigment dispersion to the ink formulation usually occurs last, after the other ingredients are thoroughly mixed to homogeneity.

The amount of additional solution resin added pursuant to the preferred method is determined by the design parameters (i.e., total solids) chosen for the overall ink.

Aqueous inks prepared from concentrated pigment dispersions may be used in the same fashion as any other aqueous ink.

We have noted several advantages to using novel pigment dispersions as described herein. Concentrated pigment dispersions permit higher pigment/dispersant ratios to be used. As such, more pigment can be loaded into a formulated ink. Since more pigment can be delivered to an ink, the same color intensity formerly attained by pigment dispersions can now be achieved using less pigment. This results in a savings in raw materials for ink formulation.

Inks formulated from the concentration pigment dispersions can have strong colour developments, e.g. stronger than inks prepared using other dispersing agents. Inks prepared from the present pigment dispersions ultimately may have good rheological properties relative to those with current dispersing agents, such as lower viscosities and increased stability or longer shelf lives. In some cases (depending upon the dispersant and pigment combination), enhanced color development is sacrificed for decreased viscosities, and vice versa. In those cases, the possible trade-off between enhanced color development and rheological properties presents a design choice for the ink formulation. Moreover, the aqueous inks are environmentally friendly because they do not incorporate solvents that are rich in volatile organic compounds.

The practice of the present invention is illustrated by the following non-limiting examples. Styrene/maleic anhydride copolymer dispersing agents are compared, in the examples below, with the performance of another acidic polymer soluble in an alkali solution, styrene/acrylic acid/α-methyl styrene terpolymer. This acrylic resin is commercially available as Joncryl 678 from S.C. Johnson. A hydrolyzed solution thereof contains 33.0 - 37.3 wt.% solids. Following in the examples, pigment dispersions and inks were prepared, unless indicated otherwise, as follows.

In preparing pigment dispersions, the premix blend was mechanically stirred under low sheer conditions for a period of time, for example, approximately 15 to 20 minutes. The premix was then visually evaluated to determine pigment wetting. Only those premixes that remained pourable after the blending operation were carried to the milling stage.

Milling of the pigment dispersion was carried out in a Dispersant model SL-M12 horizontal bead mill, using one millimeter zirconium silicate beads as the grinding medium. The premix was placed in the mill and recirculated through the milling chamber until a "fineness of grind" reading of zero was obtained on a grindometer. The mill speed was held constant at 6,000 rpm. The dispersion (now referred to as a "mill base") was then allowed to degas and equilibrate for 24 hours before further testing. Stable samples were then tested for color development or strength, pH and viscosity. Samples were also split for aging analysis at both 60° C and under ambient conditions. Heat-aging was conducted to simulate a longer aging process and, more practically, to gauge the performance of the pigment dispersion under higher temperatures. After seven days, ambient temperature and heat-aged samples were again examined for signs of instability. The ambient and heat-aged samples were also tested for color development, pH and viscosity.

The color strength of the prepared pigment dispersions was tested by adding a small amount of the dispersion to a relatively larger amount of a tint base. A commercially prepared white paint was used as a tint base (VF-11 from True Value Hardware) in order to obtain a sample with a color strength that can be conveniently measured in a laboratory colorimeter. To approximately 44.5 grams to 50 grams of a tint base was added 0.5 grams of the subject pigment dispersion to be tested, and 5.0 grams of water. The dispersion/tint base samples were mixed on a paint shaker for 0.5 hours. A #30 wire-wound rod was then used to draw a film of each of the dispersion/tint base samples down on a 3NT-1 test paper. The heavy coating laid down by the #30 bar are ensured opacity in the draw down when dry.

Once the test coatings are dry, color development was measured with an X-Rite colorimeter. The standard for the instrument was defined as a dispersion of the subject pigment prepared with a commercially available acrylic resin dispersant (Joncryl 678 from S.C. Johnson). Subject dispersion samples with a corresponding age and temperature profile were then compared to the standard. Where inks are tested for color strength, the standard was chosen as an ink prepared from a dispersion made from an acrylic resin (Joncryl 678) and the same emulsion polymer used for the preparation of the subject ink. The lowest reflectance value between 420 nanometers and 680 nanometers is determined by the colorimeter and used to calculate the color development. The color development is reported automatically by the colorimeter as a chromatic color strength value at a particular wavelength. Samples with values above 100% are stronger than the standard, while values below 100% are weaker than the standard.

pH testing, where reported, was conducted using an Orion Autotitrator calibrated for systems with pH values between 7 and 10.

Viscosity testing was performed using a Brookfield RVDV-III Programmable Rheometer at 25° C using either a #18 or a #27 spindle. The choice of spindle depends upon the thickness of the sample. Viscosity measurements were taken at spindle speeds ranging from 0.5 rpm to 50 rpm. This instrument is of the cone and plate configuration. Viscosity is an indicator of the binder's ability to effectively disperse pigment and is an indicator of the pigment dispersion's ability to remain stable and viable for ink formulation. An ink's viscosity is an important physical property because inks must handle the stress of the printing process, but also be workable.

In order to illustrate the enhancing effects of SMA copolymer (as a pigment dispersing agent) on color strength and viscosity on a pigment dispersion and an ink formulated therefrom, the first two examples below address common 3:1 pigment/dispersant dispersion preparations.

### Example 1

Stable dispersions of carbon black pigment (Regal 660 from Cabot Corporation) were prepared having a 3:1 pigment/dispersant ratio and 35% pigment loading. A dispersion employing Joncryl 678 as a dispersant (binder) was prepared by combining 35 g carbon black pigment, 0.5 g Colloids 999 defoamer, 34.4 g Joncryl 678, and 30.1 g water. A dispersion employing SMA 1000 as a dispersant was prepared from 35 g carbon black pigment, 0.5 g Sulfonyl DF-110D defoamer, 31.3 g SMA 1000, and 33.2 g water.

After 24 hours of ambient temperature aging, the SMA 1000 dispersion showed a chromatic strength of 455.54 at 680 nm and the Joncryl 678 dispersion was standardized at 100.00 at 680 nm. Thus, after 24 hours, the SMA 1000-based dispersion showed an approximate 350% better color development than the corresponding Joncryl 678-based dispersion.

Both dispersions were subjected to heat aging at 60 °C for a 7 day period. The heat-aged SMA 1000 dispersion was determined to have a color strength 156% better than the Joncryl 678 dispersion (chromatic strength at 680 nm of 255.67 for the SMA 1000 dispersion and 100.00 for the Joncryl 678 dispersion).

At 24 hours following preparation, the SMA 1000-based dispersion generally had lower viscosities than the corresponding Joncryl 678-based dispersion. At 5.0 rpm, the SMA 1000 and Joncryl 678 dispersions had respective viscosities of 2988 cP and 5131 cP; at 10 rpm. the respective viscosities were 2123 cP and 3038 cP. The viscosities were similar at 50 rpm.

After 7 days of ambient temperature aging, the viscosities of both dispersions were generally similar. At 5.0 rpm, the SMA 1000 dispersion had a viscosity of 5603 cP and the Joncryl 678 had a viscosity of 6095 cP; at 50 rpm, the respective viscosities for the SMA 1000 and Joncryl 678 dispersions were 1258 cP and 1089 cP.

After 7 days of heat aging, the SMA 1000-based dispersion exhibited much higher viscosities than the corresponding Joncryl 678-based dispersion. At 5.0 rpm, the SMA 1000 dispersion's viscosity was 10124 cP and the Joncryl 678 dispersion's viscosity was 3067; at 50 rpm, the SMA 1000 and the Joncryl 678 dispersions had respective viscosities of 4128 cP and 739 cP.

### Example 2

Inks were formulated from 3:1 pigment/dispersant dispersions of carbon black pigment (Regal 660 from Cabot Corporation) utilizing SMA 1000 and Joncryl 678, respectively, as dispersing agents. The emulsion polymer used for both ink formulations was Joncryl 90. The SMA 1000/Joncryl 90 ink (SMA 1000 as the dispersing agent and Joncryl 90 as the ink emulsion polymer solution, at 10% pigment loading, was formulated from 28.6 g dispersion, 0.5 g defoamer, 52.2 g emulsion and 12.6 g SMA 1000, and 6.10 g water (the "SMA 1000 ink"). The Joncryl 678/Joncryl 90 ink was formulated from 28.6 g dispersion, 0.5 g defoamer, 52.2 g emulsion, 13.9 g Joncryl 678, and 4.8 g water (the "Joncryl 678 ink"). Both inks were formulated to have equal pigment loading and solids content.

After 7 days ambient aging of both inks, the SMA 1000 ink had a 43 % better color development than the comparable Joncryl 678 ink. A 7 day heat-aged sample of the SMA 1000 ink showed 28% better color development than the 7-day heat-aged Joncryl 678 ink.

The viscosities of both inks were examined after 7 days of ambient aging. The viscosity at 2.5 rpm for the SMA 1000 ink was 2163 cP and the viscosity of the corresponding Joncryl 678 ink was 265 cP. At 50 rpm, the SMA 1000 ink's viscosity was 129 cP and the Joncryl 678 ink's viscosity was 129 cP.

After 7 days of heat aging, the SMA 1000 ink again showed higher viscosities. At 2.5 rpm, the SMA 1000 ink's viscosity was 1573 cP and the Joncryl 678 ink's viscosity was 232 cP; at 50 rpm, the respective viscosities were 482 cP and 127 cP. However, there was little change between the ambient and heat aged samples of the SMA 1000 inks at higher shear rates.

The following examples illustrate the development of concentrated pigment dispersions having pigment/dispersant ratios preferably in the range from about 6:1 to about 8:1, and in select cases, inks formulated therefrom. These examples also show the enhanced color development and rheological properties of dispersions (and inks) containing as a dispersant a styrene/maleic anhydride copolymer, or derivative of same, as compared to an acrylic resin dispersant.

### Example 3

### Preparation of 8:1 pigment/dispersant dispersions

Three different stable pigment dispersions of carbon black pigment (Regal 660 from Cabot Corporation) having an 8:1 pigment/dispersant ratio were prepared using SMA 1440, SMA 17352, and Joncryl 678. All three contained a 46% pigment loading. A dispersion employing SMA 1440 was prepared by combining 46.0 g carbon black pigment, 0.5 g Sulfonyl 104 A defoamer, 17.3 g SMA 1440, and 23.9 g water. A dispersion employing SMA 17352 was prepared by combining 46.0 g carbon black pigment, 0.5 g Sulfonyl 104-A defoamer, 24.9 g SMA 17352, and 28.6 g water. A dispersion utilizing Joncryl 678 as the dispersing agent was prepared by combining 46.0 g carbon black, 0.5 g Colloids 999 defoamer, 17.0 g Joncryl 678, and 36.2 g water.

### Example 4

An SMA 1440 dispersion and a Joncryl 678 dispersion prepared as set forth in Example 3 were assessed for color development properties. After 24 hours of ambient aging, the SMA 1440 dispersion had approximately 113% better color development than the corresponding Joncryl 678 dispersion (chromatic strength at 680 nm of 213.44 for the SMA 1440 dispersion. 100.00 for the Joncryl 678 dispersion). After 7 days of heat-aging at 60 C, the SMA 1440 dispersion exhibited an approximate 100% better color development than the corresponding Joncryl 678 dispersion (a chromatic strength at 680 nm of 202.36 for the SMA 1440 dispersion and 100.00 for the Joncryl 678 dispersion).

### Example 5

An SMA 1440-based dispersion and a Joncryl 678-based dispersion were prepared as set forth in Example 3. The viscosities of these dispersions were comparatively evaluated.

At 24 hours following its preparation, the SMA 1440 dispersion had a viscosity approximately equivalent to the Joncryl 678 dispersion. At 10 rpm, the Joncryl 678 dispersion had a viscosity of 541 cP and the SMA 1440 dispersion had a viscosity of 590 cP. At 100 rpm, both had a viscosity of 231 cP.

After 7 days of ambient aging, the viscosity of the SMA 1440 did not significantly change. The viscosity of the SMA 1440 dispersion was 681 cP at 10 rpm. However, the viscosity of the Joncryl 678 dispersion after 7 days of ambient aging rose to 4030 cP at 10 rpm. After 7 days of heat aging at 60 °C, the SMA 1440 dispersion exhibited an increased viscosity, at 10 rpm, of 1475 cP. The viscosity of the Joncryl 678 after 7 days heat-aging similarly increased, but to a greater extent, to 2654 cP at 10 rpm. During the heat-aging, the pH of the Joncryl 678 dispersion decreased from 8.3 to 8.2, while the pH of the SMA 1440 dispersion decreased from 8.3 to 8.1.

### Example 6

An SMA 17352-based dispersion prepared as set forth in Example 3 was comparatively evaluated against a Joncryl 678-based dispersion as similarly prepared in Example 4, as regards color development. At 24 hours after the preparation of both dispersions, the SMA 17352-based dispersion had an approximately 160% better color development than the Joncryl 678 dispersion (a chromatic strength at 680 nm of 260.98 and 100.00, respectively). At 7 day ambient aging, the SMA 1.7352 dispersion exhibited a 74% increase in color development over the Joncryl 678 dispersion (a chromatic strength at 680 nm of 174.61 and 100.00, respectively). After 7 day heat aging at 60 C, the color strength of the SMA 1440 dispersion was approximately equivalent to that of the Joncryl 678 dispersion (a chromatic strength at 680 nm of 96.4 and 100.00, respectively).

The viscosities of these two dispersions were also compared. After 24 hours from preparation, the SMA 17352 dispersion had higher viscosities than the corresponding Joncryl 678 dispersion. At 5 rpm, the SMA 17352 dispersion had a viscosity of 2359 cP and the Joncryl 678 dispersion had a viscosity of 688 cP. At 10 rpm, the SMA 17352 dispersion had a viscosity of 1661 cP and the Joncryl 678 dispersion had a viscosity of 541 cP.

After 7 days of ambient temperature aging, the viscosities of the SMA 17352 dispersions were generally lower than those for the Joncryl 678 dispersion (except at 0.5 rpm). At 5 rpm, the SMA 17352 dispersion's viscosity was 4424 cP and the Joncryl 678 dispersion's viscosity was 5505 cP; at 10 rpm the respective viscosities were 2910 cp and 4030 cP.

After 7 days of heat aging, the SMA 17352 dispersion exhibited lower viscosities than the corresponding Joncryl 678 dispersion. The viscosities at 0.5 rpm, 5 rpm. and 10 rpm for the SMA 17352 dispersion were, respectively. 6488 cP, 2064 cP, and 1475 cP. The viscosities for the Joncryl 678 dispersion at the same conditions were, respectively, 6881 cP, 3392 cP, and 2654 cP. Both the SMA 17352 and Joncryl 678 dispersions showed smaller increases during heat aging than during ambient temperature aging.

### Example 7

Stable pigment dispersions were prepared with Pigment Red 48:2 (also referred to as Permanent Red 2B or Rubine 2B) at a 6:1 pigment/dispersant ratio. These pigment dispersions were prepared at a 38% pigment loading. The dispersing agents used are SMA 1000, SMA 2000, SMA 1440, SMA 17252, SMA 2625 and Joncryl 678. The SMA 1000-based dispersion contained 38.0 g pigment, 1.0 g Sulfonyl DF-110D defoamer, 17.1 g SMA 1000, and 43.9 g water. The SMA 2000-based dispersion contained 38.0 g pigment, 1.0 g Sulfonyl DF-110D defoamer. 28.8 g pigment, and 32.2 g water. The SMA 1440-based 1440 dispersion contained 38.0 g pigment, 1.0 g PI-35 defoamer, 18.05 g SMA 1440, and 42.5 g water. The SMA 17352-based dispersion contained 38.0 g pigment, 1.0 g Sulfonyl DF-110D defoamer, 32.9 g SMA 17352, and 28.1 g water. The SMA 2625-based dispersion contained 38.0 g pigment, 1.0 g Sulfonyl DF-110D defoamer, 32.5 g SMA 2625, and 28.5 g water. The Joncryl 678-based dispersion contained 38.0 g pigment, 1.0 g colloid 999 defoamer, 17.0 g Joncryl 678, and 44.0 g water.

### Example 8

The viscosities of the pigment dispersions of Example 7 (6:1 pigment/binder ratio, 38% pigment loading) are comparatively evaluated. At 24 hours after their respective preparations, all SMA-based dispersions exhibited lower viscosity values than the Joncryl 678-based dispersion. At 10 rpm. the viscosities for the SMA 1000, SMA 2000, SMA 1440, SMA 17352, SMA 2625, and Joncryl 678-based dispersions were, respectively: 291 cP, 70 cP. 350 cP, 96 cP. 38 cP, and 1500 cP.

After 7 days of ambient temperature aging, all SMA-based dispersions exhibited lower viscosities (at 0.5 rpm) than the Joncryl 678-based dispersion. At 10 rpm, all SMA-based dispersions had viscosities lower than the Joncryl 678-based dispersion. except for the SMA 1000, which had a measured pH higher than the other dispersions. The viscosity data for 7 day ambient temperature aging is shown below in Table 1.

**Table 1.**

| Viscosity at 7-day Ambient Aging (cP) | | | |
|---|---|---|---|
| Solution Resin | 0.5 rpm | 10 rpm | pH |
| Joncryl 678 | 3968 | 861 | 9.5 |
| SMA 1000 | 3500 | 1650 | 9.1 |
| SMA 2000 | 448 | 240 | 7.4 |
| SMA 1440 | 768 | 413 | 8.9 |
| SMA 17352 | 192 | 93 | 8.9 |
| SMA 2625 | 64 | 48 | 8.9 |

At 7 days heat aging at 60 °C, the SMA 17352-based dispersion showed a significantly lower viscosity than the corresponding Joncryl 678-based dispersion. At 0.5 rpm, the SMA 17352 dispersion had a viscosity of 320 cP and the Joncryl 678 dispersion had a viscosity of 23,500 cP.

### Example 9

Stable pigment dispersions of phthalo blue β pigment (Pigment Blue 15:3) having a 6:1 pigment/dispersant ratio were prepared. The dispersing agents used were SMA 1000, SMA 1440, and Joncryl 678. The pigment loadings for the SMA-based dispersions were both 40.77%. The pigment loading for the Joncryl 678-based dispersion is 40.37%. A commercially available defoamer, Dee Fo 1144/A75, was used in each preparation.

The SMA 1000-based dispersion is prepared by combining 210.0 g pigment, 94.1 g SMA 1000 solution resin, 5.0 g defoamer, and 182.0 g water. The SMA 1440-based dispersion is prepared from 210.0 g pigment, 105.1 g SMA 1440 solution resin, 5.0 g defoamer, and 171.0 g water. The Joncryl 678-based dispersion is prepared from 210.0 g pigment. 93.8 g Joncryl 678 solution resin, 5.0 g defoamer, and 187.2 g water.

### Example 10

The color development of the pigment dispersions prepared as set forth in Example 9 (6: 1 pigment/dispersant ratio) are comparatively evaluated. Color strength was determined at 24 hours and after periods of two and three weeks of ambient temperature aging. Chromatic strength is reported at 630 nm.

The results are shown below in Table 2.

**Table 2.**

| Color Strength (at 630 nm) | | | |
|---|---|---|---|
| | SMA 1000 | SMA 1440 | Joncryl 678 (Std.) |
| 24 hours | 122.93 | 130.07 | 100.00 |
| 2 wks ambient | 111.95 | 112.94 | 100.00 |
| 3 wks ambient | 110.57 | 111.82 | 100.00 |

Although all the dispersions lost a small amount of color strength over time, and the color strength differential narrowed over the time interval observed, at the end of 3 weeks of ambient aging, the SMA-based dispersions were still stronger in color strength than the Joncryl 678-based dispersion. The 0.4% difference in pigment loading between the SMA-based dispersions (40.77%) and the Joncryl 678-based dispersion (40.37%) is too small to account for the substantial difference seen in the dispersion color strength of the SMA-based dispersions.

### Example 11

The viscosities of the pigment dispersions prepared as set forth in Example 9 (6:1 pigment/dispersant ratios) are comparatively evaluated. The viscosities and pH values at 24 hours and 2 weeks of ambient aging are determined. The results are shown below in Tables 3 and 4.

**Table 3.**

| Viscosity (cP) and pH Data (t=24 hrs.) | | | |
|---|---|---|---|
| Solution Resin | 0.5 rpm | 10 rpm | pH |
| SMA 1000 | 25.500 | 9,100 | 8.93 |
| SMA 1440 | 11.000 | 1,900 | 8.77 |
| Joncryl 678 | 71,000 | 9,225 | 8.48 |

**Table 4.**

| Viscosity (cP) and pH Data (t=2 weeks) | | | |
|---|---|---|---|
| Solution Resin | 0.5 rpm | 10 rpm | pH |
| SMA 1000 | 57.500 | 10,450 | 9.05 |
| SMA 1440 | 5,184 | 781 | 8.80 |
| Joncryl 678 | 51,500 | 8,400 | 8.55 |

After the two-week period, the viscosity of the SMA 1440-based dispersion generally remained an order of magnitude lower than the others. which had become more similar in profile. After one month of ambient temperature aging, the Joncryl 678-based dispersions and the SMA 1000-based dispersion had thickened to a point where it was impossible to measure their viscosities. However, at one month, the SMA 1440-based dispersion remained pourable, with a viscosity at 0.5 rpm of 6848 cP and 944 cP at 10 rpm.

### Example 12

### Preparation Of Aqueous Inks

Aqueous inks were prepared from the pigment dispersions prepared in Example 9. These Pigment Blue 15:3 pigment dispersions contain a 6:1 pigment/dispersant ratio. The inks of this example were prepared with a pigment loading of 12% and a total solids wt% of 40.5 (12.0 wt.% pigment solids, 28.5 wt% from the emulsion and solution resin solids). The ratio of emulsion resin solids to solution resin solids is 2.17:1 (19.5% emulsion solids, 9.0% solution resin solids). The emulsions utilized in preparation of the inks were Lucidene 650 from Morton and SCX-2660 from S.C. Johnson. Lucidene 650 has a solids content of 45.5 wt. % of the emulsion and SCX-2660 has a solids content of 49.0 wt.% of the emulsion.

Each of the pigment dispersions of Example 9 (SMA 1000, SMA 1440, and Joncryl 678-based dispersions) were individually combined with the respective emulsions, forming six different inks. For example, an SMA 1000/Lucidene 650 ink is formulated from SMA 1000 as a dispersing agent for the pigment in the mill base, and Lucidene 650 is used as the emulsion polymer in the ink formulation. An SMA 1000/Lucidene 650 ink contains 29.43 g SMA 1000-based dispersion. 0.4 g DF-70 defoamer, 42.8 g emulsion, 18.82 g additional SMA 1000, and 8.55 g water.

An SMA 1000/SCX2660 ink was formulated with 29.43 g SMA 1000-based dispersion, 0.40 g defoamer, 37.80 g SCX2660 emulsion, 18.82 g additional SMA 1000 solution resin, and 13.55 g water. An SMA 1440/Lucidene 650 ink was prepared from 29.42 g SMA 1440-based dispersion. 0.40 g defoamer, 42.8 g emulsion, 21.02 g additional SMA 1440 solution resin, and 6.35 g water. An SMA 1440/SCX2660 ink was prepared from 29.43 g SMA 1440-based dispersion. 0.40 g defoamer, 37.8 g emulsion. 21.02 g additional SMA 1440 solution resin, and 11.35 g water. A Joncryl 678/Lucidene 650 ink was prepared by combining 29.73 g Joncryl 678-based dispersion, 0.4 g defoamer, 42.86 g emulsion, 18.77 g additional Joncryl 678 solution resin, and 8.24 g water. A Joncryl 678/SCX2660 ink was prepared by combining 29.73 g Joncryl 678- based dispersion, 0.4 g defoamer, 37.80 g emulsion, 18.77 g additional Joncryl 678 solution resin, and 13.30 g water.

### Example 13

The color strengths of the inks prepared in Example 12 are comparatively evaluated. Results are tabulated in Table 4 and 5 for 24 hour and 7 day ambient temperature aging. The inks based on Joncryl 678 dispersions were taken as the standard.

**Table 4.**

| Chromatic Strength (at 630 nm) of Inks Formulated With Lucidene 650 Emulsion Solution Resin: | | | |
|---|---|---|---|
| Joncryl 678 | | SMA 1000 | SMA 1440 |
| Time | (Std.) | (% Change Over Std.) | (% Change Over Std.) |
| initial | 100.00 | 141.69 (+41.69) | 139.57 (+39.57) |
| 24 hour | 100.00 | 141.85 (+41.85) | 142.92 (+42.92) |
| 7 days | 100.00 | 104.67 (+4.67) | 102.46 (+2.46) |

**Table 5.**

| Chromatic Strength of Inks Formulated With SCX2660 Emulsion Solution Resin: | | | |
|---|---|---|---|
| Time | Joncryl 678 (Std.) | SMA 1000 (%Change Over Std.) | SMA 1440 (% Change Over Std.) |
| initial | 100.00 | 102.74 (+2.74) | 110.29 (+10.29) |
| 24 hour | 100.00 | 104.82 (+4.82) | 111.06 (+11.06) |
| 7 days | 100.00 | 102.65 (+2.65) | 105.09 (+5.09) |

The inks based upon SMA pigment dispersions show, initially, a significant chromatic strength advantage, particularly for the inks using Lucidene 650 as an emulsion polymer. This advantage can be attributed to the better color strength developed by the SMA-based dispersions.

### Example 14

Viscosities of the inks prepared with Lucidene 650 emulsion polymer, as prepared in Example 12, are comparatively evaluated. Results are tabulated in Tables 6 and 7 below.

**Table 6.**

| Viscosity (cP) Data For Inks Formulated With Lucidene 650 Emulsion (at 0.5 rpm) Solution Resin: | | | |
|---|---|---|---|
| Time | Joncryl 678 | SMA 1000 | SMA 1440 |
| initial | 2048 | 256 | 3584 |
| 24 hour | 1088 | 192 | 4288 |
| 7 days | 896 | 320 | 4160 |

**Table 7.**

| Viscosity (cP) Data For Inks Formulated With Lucidene 650 Emulsion (@ 10 rpm) Solution Resin: | | | |
|---|---|---|---|
| Time | Joncryl 678 | SMA 1000 | SMA 1440 |
| initial | 349 | 122 | 365 |
| 24 hour | 304 | 144 | 416 |
| 7 days | 275 | 138 | 400 |

### Example 15

Stable pigment dispersions of Pigment Yellow 14 (Diarylide Yellow AAOT) were prepared having a pigment/dispersant ratio of 6:1. The dispersions are prepared with a pigment loading of 33%.

An SMA 1440-based dispersion is prepared from 165.0 g pigment, 82.6 g SMA 1440 solution resin, 222.9 g water, and 2.5 g Dee Fo 1145A/75 defoamer. A Joncryl 678-based dispersion is prepared from 165.0 g pigment, 83.3 g Joncryl 678 solution resin, 2.5 g defoamer, and 222.2 g water.

The color strength of both dispersions were comparatively evaluated. The color strength of the SMA 1440-based dispersion (a chromatic strength determined at 420 nm) is stronger than the Joncryl 678-based dispersion. At 24 hours following preparation, the SMA 1440-based dispersion exhibited a 9% greater color development than the Joncryl 678-based dispersion. After 7 days of heat aging, the SMA 1440-based dispersion showed a color strength 7.2% greater than the Joncryl 678-based dispersion.

### Example 16

Stable pigment dispersions of Pigment Yellow 14 (Roma-surface treated) were prepared having a pigment/dispersant ratio of 6:1 and a pigment loading of 38%.

An SMA 17352-based dispersion is prepared from 190.0 g pigment, 137.1 g SMA 17352 solution resin, 143.4 g water, and 2.5 g Dee Fo 1145A/75 defoamer. A Joncryl 678-based dispersion is prepared from 190.0 g pigment. 95.9 g Joncryl 678 solution resin. 2.5 g defoamer, and 143.4 g water.

The color strength of both dispersions were comparatively evaluated. The color strength of the SMA 17352-based dispersion (a chromatic strength determined at 420 nm) is generally stronger than the Joncryl 678-based dispersion. At 24 hours following preparation, the SMA 17352-based dispersion exhibited a 9.2% greater color development than the Joncryl 678-based dispersion. After 48 hours, the SMA 17352-based dispersion exhibited a 1.8% weaker color development than the Joncryl 678-based dispersion. After 7 days of heat aging, the SMA 17352-based dispersion showed a color strength 7.2% greater than the Joncryl 678-based dispersion.

The SMA 17352-based dispersions exhibited significantly higher viscosities than the corresponding Joncryl 678-based dispersion at 24 hours and 48 hours following preparations. At 24 hours, the respective viscosities for the SMA 17352 (pH=7.5) and Joncryl 678 (pH=7.7) dispersions: at 2.5 rpm, 4200 cP and 410 cP; at 10.0 rpm, 2550 cP and 227 cP; and at 50 rpm, 1250 cP and 119 cP.

At 48 hours following preparation, the respective viscosities for the SMA 17352 (pH=7.8) and Joncryl 678 (pH=7.8) dispersions: at 2.5 rpm. 2900 cP and 461 cP; at 10 rpm, 1950 cP and 253 cP, and at 50 rpm, 1015 cP and 131 cP.

After adjusting pH slightly upward. the 7 day ambient temperature aged SMA 17352 dispersion showed higher viscosities. At 5.0 rpm. for example, the SMA 17352 dispersion (pH=9.1) had a viscosity of 2150 cP and the Joncryl 678 (pH=8.8) dispersion had a viscosity of 570 rpm.

After 7 days of heat aging, the viscosities of both were more comparable, though the SMA 17352 dispersion had generally higher viscosities. At 2.5 rpm, the SMA 17352 dispersion (pH=9.7) had a viscosity of about 13100 cP and the Joncryl 678 (pH=9.3) dispersion had a viscosity of about 10800 cP; at 10 rpm, the SMA 17352 dispersion's viscosity was 6175 cP and the Joncryl 678 dispersion's was 4050 cP.

### Example 17

Stable pigment dispersions of carbon black pigment (Regal 660 from Cabot Corporation) were prepared having a pigment/dispersant ratio of 7:1. An SMA 1440-based dispersion was prepared at a 43.2% pigment loading and a corresponding Joncryl 678-based dispersion was prepared at a 42% pigment loading.

An SMA 1440-based dispersion was prepared from 216 g pigment, 90.1 g SMA 1440 solution resin, 191.4 g water, and 2.5 g defoamer. A Joncryl 678-based dispersion was prepared from 210 g pigment, 80.4 g Joncryl 678 solution resin, 2.5 g defoamer, and 207.1 g water.

Unlike the pigment dispersions otherwise described herein, the constituents of the pigment dispersions of this example were first blended in a high-shear blender instead of a low-shear mixer prior to milling. High-speed mixing was carried out for a time period of about 15-17 minutes. Milling was carried out as previously set forth. The high-shear mixing creates a more effective distribution of the pigment in the premix.

### Example 18

The color strengths of the pigment dispersions prepared in Example 17 are comparatively evaluated. A pigment dispersion having a 43.2% pigment loading was prepared, but reduced to 42% to enable comparison. Two additional SMA 1440-based dispersions were prepared on separate days (identified below as SMA 1440(a) and (b)) and tested against a corresponding Joncryl 678-based dispersion. These pigment dispersions had a pigment loading of 42%. The color strength results (at 680 nm) are tabulated in Table 8 for 24 hour, 7 day heat aging.

**Table 8.**

| Chromatic Strength Of Pigment Dispersions (% change from Joncryl 678 Standard) | | | |
|---|---|---|---|
| Dispersant | 24 hr. | 7 Day Ambient | 7 Day Heat |
| Joncryl | 100.00 | 100.00 | 100.00 |
| SMA 1440 | 100.51(+0.5) | 103.32 (+3.3) | 103.27(+3.3) |
| SMA 1440(a) | 99.01 (-1.0) | 98.45 (-1.6) | 99.91 (-0.1) |
| SMA 1440(b) | 98.30 (-1.7) | 101.33 (+3.3) | 103.74(+3.3) |

The reported color strengths are approximately equivalent, considering the variability of the method of measurement (± 3%). The color strengths of the SMA 1440-based dispersions are not as significant as those measured for the dispersions of Example 4 because the preparation of the pigment dispersions of this example included high-shear mixing which most likely dispersed the pigment more effectively. In the pigment dispersions of example 4, which were prepared under less than optimal shearing, the color strengths of the SMA 1440-based pigment dispersions were markedly stronger than the corresponding Joncryl 678-based dispersions because the SMA solution resin produced better dispersions.

### Example 19

Viscosities of the pigment dispersions prepared in Examples 17 and 18 are comparatively evaluated. The results are shown below in Tables 9-11.

**Table 9.**

| Viscosity (cP) Data for Pigment Dispersions at 24 Hours. | | | | | |
|---|---|---|---|---|---|
| Dispersant | 0.5 rpm | 5.0 rpm | 10 rpm | 50 rpm | pH |
| Joncryl 678 | 3968 | 1485 | 1072 | 501 | 8.6 |
| SMA 1440 | 1344 | 717 | 560 | 305 | 8.6 |
| | | | | | |
| SMA 1440(a) | 704 | 435 | 358 | 209 | 8.8 |
| SMA 1440(b) | 640 | 384 | 317 | 190 | 8.8 |

**Table 10.**

| Viscosity (cP) Data for Pigment Dispersions at 7 days Ambient Aging. | | | | | |
|---|---|---|---|---|---|
| Dispersant | 0.5 rpm | 50 rpm | 10 rpm | 50 rmp | pH |
| Joncryl 678 | 28500 | 8450 | 5750 | 2320 | 8.7 |
| sma 1440 | 2560 | 1152 | 864 | 431 | 8.6 |
| sma 1440(a) | 1472 | 698 | 541 | 287 | 8.6 |
| SMA 1440(b) | 1088 | 589 | 470 | 258 | 8.7 |

**Table 11.**

| Viscosity (cP) Data for Pigment Dispersions at 7 Day Heat Aging. | | | | | |
|---|---|---|---|---|---|
| Dispersant | 0.5 rpm | 5.0 rpm | 10 rpm | 50 rpm | pH |
| Joncryl 678 | 182,000 | 39,250 | 24,675 | ----- | 8.5 |
| SMA 1440 | 60,500 | 14,650 | 9,575 | 3,620 | 8.2 |
| SMA 1440(a) | 52,000 | 12,350 | 8,075 | 3,045 | 8.4 |

The viscosities of the SMA 1440 dispersions were always lower than the comparable Joncryl 678-based dispersions. Even at a higher pigment loading (43.2% for the SMA 1440 dispersion versus 42% for SMA 1440(a) and (b) dispersions), this relationship is true. After 7 days of heat aging, when all dispersions exhibited increased viscosities, the SMA 1440-based dispersions had viscosities about one-third that of the Joncryl 678-based dispersion.

### Example 20

Blue inks (prepared from phthalocyanine blue pigment) were prepared using Joncryl 90 emulsions. Three blue inks were prepared from three separate pigment dispersions. A first dispersion contained an 8:1 pigment/dispersant ratio, using SMA 1440 as the dispersant (42 wt% pigment in the dispersion). A second dispersion contained an 8:1 pigment/dispersant ratio, using SMA 1440 as the dispersant (46 wt% pigment). A third dispersion was prepared with a 4:1 pigment/dispersant ratio, using Joncryl 678, a styrene/acrylic copolymer, as the dispersant (35 wt% pigment).

The Joncryl 90 emulsion has a glass transition temperature (Tg) of about 110°C. The three inks were prepared in accordance with the formulations shown in Table 12.

**Table 12.**

| Ink formulations (phthalocyanine blue pigment and Joncryl 90 emulsion) (values presented as wt% of overall ink formulation). | | | |
|---|---|---|---|
| | SMA 1440-based dispersion @ 8/1, 42 wt% | SMA 1440-based dispersion @ 8/1, 46 wt% | Joncryl 678-based dispersion @ 4/1, 35 wt% |
| pigment dispersion | 33.33 | 30.43 | 40.00 |
| additional solution resin (Joncryl 678 @ 35 wt%) | - | - | 10.00 |
| additional solution resin (SMA 1440 @ 35 wt%) | 15.00 | 15.00 | - |
| Emulsion (Joncryl 90) | 47.43 | 47.73 | 47.73 |
| coalescing agent | 2.10 | 2.10 | 2.10 |
| Defoamer | 0.50 | 0.50 | 0.50 |
| Water | 1.34 | 4.24 | - |
| Total | 100.00 | 100.00 | 100.00 |

Three stable inks were prepared by combining the constituents set forth in Table 12. Each of the inks contained 42 wt% total solids (exclusive of defoamer), 14 wt% pigment solids, and an emulsion/solution resin solids ratio of 3/1. The additional solution resins introduced to the ink formulation were dissolved in an aqueous alkali solution. at 35 wt% solution resin solids. The defoamer employed was Air Product's DF-70. The coalescing agent was Dowanol EPh (Dow Chemical Co.), which is 2-phenoxyethanol. Stable inks were prepared by combining the constituents, except the pigment dispersion, until they were homogeneously dispersed. The pigment dispersion was thereafter added to prepare the resulting ink, thus avoiding instability or shocking.

### Example 21

Blue inks (using phthalocyanine blue pigment) were prepared using Joncryl 77 emulsions. Three blue inks were prepared from the three separate pigment dispersions utilized in Example 20. The Joncryl 77 emulsion has a Tg of about 21 °C. The three inks were prepared from the formulations in Table 13.

**Table 13.**

| Ink formulations (phthalocyanine blue pigment and Joncryl 77 emulsions) (values presented as wt% of overall ink formulation). | | | |
|---|---|---|---|
| | SMA 1440-based dispersion @ 8/1, 42 wt% | SMA 1440-based dispersion @ 8/1, 46 wt% | Joncryl 678-based dispersion @ 4/1, 35 wt% |
| dispersion | 33.33 | 30.43 | 40.00 |
| additional solution resin (Joncryl 678 @ 35 wt%) | - | - | 10.00 |
| additional solution resin (SMA 1440 @ 35 wt%) | 15.00 | 15.00 | - |
| Emulsion (Joncryl 77) | 45.65 | 45.65 | 45.65 |
| Defoamer | 0.50 | 0.50 | 0.50 |
| Water | 5.52 | 8.42 | 3.85 |
| Total | 100.00 | 100.00 | 100.00 |

Three stable inks were prepared by combining the constituents of Table 13. Each of the inks contained 42 wt% total solids (exclusive of defoamer), 14 wt% pigment solids, and an emulsion/solution resin solids ratio of 3/1. The defoamer employed was Air Product's DF-70. Stable inks were prepared by combining the constituents, except the pigment dispersion, until the constituents were homogeneously dispersed. The pigment dispersion was thereafter added to prepare the resulting ink, thus avoiding instability or shocking.

### Example 22

A comparative analysis of the relative color strength of the six ink preparations of Examples 20 and 21 was conducted. The inks prepared from Joncryl 678-based pigment dispersions were used as the respective standards for comparison to the inks prepared from SMA 1440-based dispersions having higher pigment/dispersant ratios. The color strength is reported at the wavelength of minimum reflectance (630 mm for the phthalocyanine blue pigment). The inks' color strength was measured at seven (7) days following preparation, at ambient conditions. A positive, relative color strength value indicates that the color strength of the sample is stronger than the standard. The results are shown in Tables 14 and 15. The results indicate that stable inks formulated from pigment dispersions of the present invention having higher pigment/dispersant ratios enable a stronger color strength than identically pigmented inks prepared in a conventional fashion.

**Table 14.**

| Relative Color Strengths at 7-day Ambient Conditions | |
|---|---|
| Ink prepared from: | Relative Color Strength (against a Joncryl 678-based dispersion and Joncryl 90 emulsion) |
| SMA 1440-based dispersion (8/1, 42%) and Joncryl 90 emulsion | +3.8% |
| SMA 1440-based dispersion (8/1, 46%) and Joncryl 90 emulsion | +5.0% |

**Table 15.**

| Relative Color Strengths at 7-day Ambient Conditions | |
|---|---|
| Ink Prepared from: | Relative Color Strength (against a Joncryl 678-based dispersion and Joncryl 77 emulsion |
| SMA 1440-based dispersion (8/1, 42%) and Joncryl 77 emulsion | +6.4% |
| SMA 1440-based dispersion (8/1, 46%) and Joncryl 77 emulsion | +5.2% |

### Example 23

Red inks (prepared with Permanent Red 2B pigment) were prepared using Joncryl 90 emulsions. Two inks were prepared from two separate pigment dispersions. A first dispersion contained an 8:1 pigment/dispersant ratio, using SMA 17352 as the dispersant (42 wt% pigment in the dispersion).

A second dispersion contained a 4:1 pigment/dispersant ratio, using Joncryl 678 as the dispersing agent (33 wt% pigment). The two inks were prepared from the formulations shown in Table 16.

**Table 16.**

| Red inks prepared from Joncryl 90 emulsions (values are wt% total formulation). | | |
|---|---|---|
| | SMA 17352-based dispersion @ 8/1, 42% | Joncryl 678-based dispersion @ 4/1, 33% |
| dispersion | 31.67 | 40.30 |
| additional solution resin (Joncryl 678 @ 35%) | - | 10.08 |
| additional solution resin (SMA 17352 @ 25%) | 19.96 | - |
| Joncryl 90 emulsion | 45.34 | 45.34 |
| coalescing agent | 2.00 | 2.00 |
| Defoamer | 0.50 | 0.50 |
| Water | 0.53 | 1.78 |
| Total | 100.00 | 100.00 |

Two stable inks were prepared by combining the constituents set forth in Table 16. Both inks contained 39.9 wt% total solids, 13.3 wt% pigment loading, and an emulsion/solution resin solids ratio of 3/1. The defoamer employed was Air Product's DF-70. The coalescing agent was Dowanol EPh (Dow Chemical Co.), which is 2-phenoxyethanol. Stable inks were prepared by combining the constituents, except the pigment dispersion, until the constituents were homogeneously dispersed. The pigment dispersion was thereafter added to prepare the resulting ink, thus avoiding instability or shocking.

### Example 24

Red inks (prepared with Permanent Red 2B pigment) were prepared using Joncryl 77 emulsions. Two inks were prepared from two separate pigment dispersions. A first dispersion contained an 8:1 pigment/dispersant ratio, using SMA 17352 as the dispersant (42 wt% pigment in the dispersion).

A second dispersion contained a 4:1 pigment/dispersant ratio, using Joncryl 678 as the dispersing agent (33 wt% pigment). The two inks were prepared from the formulation shown in Table 16.

**Table 16.**

| Red inks prepared from Joncryl 77 emulsions (values are wt% total formulation). | | |
|---|---|---|
| | SMA 17352-based dispersion @ 8/1, 42% | Joncryl 678-based dispersion @ 4/1. 33% |
| dispersion | 33.17 | 42.22 |
| additional solution resin (Joncryl 678 @ 35%) | - | 9.95 |
| additional solution resin (SMA 17352 @ 25%) | 20.90 | - |
| Joncryl 77 emulsion | 45.43 | 45.43 |
| Defoamer | 0.50 | 0.50 |
| Water | - | 1.90 |
| Total | 100.00 | 100.00 |

Two stable inks were prepared by combining the constituents set forth in Table 16. Both inks contained 41.75 wt% total solids, 13.93 wt% pigment loading, and an emulsion/solution resin solids ratio of 3/1. The defoamer employed was Air Product's DF-70. Stable inks were prepared by combining the constituents, except the pigment dispersion, until the constituents were homogeneously dispersed. The pigment dispersion was thereafter added to prepare the resulting ink, thus avoiding instability or shaking.

### Example 25

Red inks (prepared with Permanent Red 2B pigment) were prepared using Lucidene 605 emulsions. Two inks were prepared from two separate pigment dispersions. A first dispersion contained an 8:1 pigment/dispersant ratio, using SMA 17352 as the dispersant (42 wt% pigment in the dispersion).

A second dispersion contained a 4:1 pigment/dispersant ratio, using Joncryl 678 as the dispersing agent (33 wt% pigment). the two inks were prepared from the formulation shown in Table 16.

**Table 16.**

| Red inks prepared from Lucidene 605 emulsions (values are wt% total formulation). | | |
|---|---|---|
| | SMA 17352-based dispersion @ 8/1, 42% | Joncryl 678-based dispersion @ 4/1, 33% |
| dispersion | 33.33 | 42.42 |
| additional solution resin (Joncryl 678 @ 35%) | - | 10.00 |
| additional solution resin (SMA 17352 @ 25%) | 21.00 | - |
| Joncryl 90 emulsion | 42.86 | 42.46 |
| Defoamer - | 0.50 | 0.50 |
| Water | 2.31 | 4.22 |
| Total | 100.00 | 100.00 |

Two stable inks were prepared by combining the constituents set forth in Table 16. Both inks contained 42 wt% total solids, 14 wt% pigment loading, and an emulsion/solution resin solids ratio of 3/1. The defoamer employed was Air Product's DF-70. Stable inks were prepared by combining the constituents, except the pigment dispersion, until the constituents were homogeneously dispersed. The pigment dispersion was thereafter added to prepare the resulting ink, thus avoiding instability or shocking.

It is further understood that the present invention is not limited to the particular embodiments shown and described herein, but that various changes and modifications may be made without departing from the scope and spirit of the invention.

## Claims

1. A pigment dispersion for an aqueous ink comprising:
pigment dispersed in a polar liquid;
dispersing agent for dispersing the pigment in the liquid, said dispersing agent comprising
styrene/maleic anhydride copolymer,
product obtainable by reaction of styrene/maleic anhydride copolymer and alcohol, or
a combination of said copolymer and said product;
wherein the weight ratio of pigment to dispersing agent in the dispersion is from about 5:1 to about 9:1, and the pigment comprises at least about 33 weight percent of the total weight of the dispersion.

2. A pigment dispersion as in claim 1, wherein the pigment is selected from the group consisting of organic pigments and inorganic pigments.

3. A pigment dispersion as in claim 2 wherein the organic pigment is a polymer.

4. A pigment dispersion as in any one of the preceding claims, wherein the liquid is water.

5. A pigment dispersion as in any one of the preceding claims, wherein the liquid comprises an alkaline aqueous solution.

6. A pigment dispersion as in claim 5, wherein the alkaline aqueous solution is selected from aqueous ammonium hydroxide, aqueous potassium hydroxide, and aqueous sodium hydroxide.

7. A pigment dispersion as in claim 5, wherein the alkaline solution is a solution of an organic amine.

8. A pigment dispersion as in any one of the preceding claims wherein the dispersing agent comprises a said styrene/maleic anhydride copolymer having a molar ratio of styrene to maleic anhydride of about 1:1 to about 3:1.

9. A pigment dispersion as in any one of the preceding claims wherein the dispersing agent comprises a said product wherein the alcohol is selected from C₁-C₈ aliphatic alcohols, C₁-C₈ cyclic alcohols, and C₆-C₁₀ aromatic alcohols.

10. A pigment dispersion as in any one of claims 1 to 7 wherein the dispersing agent comprises or consists of one or more selected from:
esterification reaction products of 2-butoxyethanol with styrene/maleic anhydride copolymer having a molar ratio of styrene to maleic anhydride of about 1.5:1,
esterification reaction products of cyclohexanol and isopropanol with styrene/maleic anydride copolymer having a molar ratio of styrene to maleic anhydride of about 1.4:1, and
esterification reaction products of N-propyl alcohol with styrene/maleic anydride copolymer having a molar ratio of styrene to maleic anhydride of about 2:1.

11. A pigment dispersion as in any one of the preceding claims wherein the weight ratio of pigment to dispersing agent in the dispersion is from about 6:1 to about 8:1.

12. A pigment dispersion as in any one of the preceding claims wherein the pigment comprises at least about 36 weight percent of the total weight of the dispersion.

13. A pigment dispersion as in claim 12, wherein the pigment comprises at least about 40 weight percent of the total weight of the dispersion.

14. A pigment dispersion as in any one of the preceding claims wherein the pigment dispersion further comprises a defoaming agent.

15. An aqueous ink composition comprising:
a pigment dispersion according to any one of claims 1 to 14;
water; and
an emulsion comprising a polymer stabilized in water;
wherein the weight of the pigment is at least 10% of the total weight of the ink composition.

16. An aqueous ink composition as in claim 15, wherein the polymer stabilized in water is selected from styrene/acrylic copolymers, acrylic polymers and styrene/butadiene copolymers.

17. A method for preparing a pigment dispersion for an aqueous ink, comprising the step of milling ingredients as specified in any one of claims 1 to 14.

18. A method for preparing an aqueous ink composition, comprising combining a pigment dispersion as defined in any one of claims 1 to 14 with water and an emulsion comprising a polymer stabilized in water, such that the weight of the pigment is at least 10% of the total weight of the ink composition.

19. A method according to claim 18, comprising the preparation of the pigment dispersion by milling the ingredients as specified in any one of claims 1 to 14.

20. A method for preparing an aqueous ink composition as in claim 18 or 19 wherein the polymer stabilized in water is selected from styrene/acrylic copolymers, acrylic polymers and styrene/butadiene copolymers.

21. A method according to any one of claims 18 to 20 comprising preparing a homogeneous mixture comprising
water,
said emulsion comprising a polymer stabilized in water,
and a solution containing styrene/maleic anhydride copolymer, product obtainable by reaction of styrene/maleic anhydride copolymer and alcohol, or a combination of said copolymer and said product; and
adding the pigment dispersion to said mixture.

22. A method as in claim 21 wherein said mixture comprises defoaming agent and/or coalescing agent.
